# EUROPÄISCHE PATENTANMELDUNG

(11) **EP 2 860 352 A1**
(43) Veröffentlichungstag der Anmeldung: **15.04.2015**
(21) Anmeldenummer: 14186098.1
(22) Anmeldetag: 24.09.2014
(51) Int. Cl.: F01D 5/30

(54) **Rotor, zugehöriges Herstellungsverfahren und Laufschaufel**

(30) Priorität: 10.10.2013 DE 102013220467
(71) Anmelder: MTU Aero Engines AG, 80995 München (DE)
(72) Erfinder: Feldmann, Manfred, 82223 Eichenau (DE); Heß, Thomas, 81541 München (DE)

(57) **Zusammenfassung**

Die Erfindung betrifft einen Rotor (10) mit einem Rotorgrundköiper (12) und einer Mehrzahl von am Rotorgrundkörper (12) angebrachten Laufschaufeln (14). Die Laufschaufeln (14) sind dabei fest bzw. unlösbar, insbesondere stoffschlüssig, an dem Rotorgrundkörper (12) angebracht. Wenigstens eine Laufschaufel (14) weist dabei zumindest ein integrales Dichtungselement (24) auf, mittels welchem ein Fußzwischenraum (22) im Bereich eines Schaufelfußes (20) radial unterhalb einer Schaufelplattform (18) der Laufschaufel (14) abgedichtet ist. Die Erfindung betrifft weiterhin ein Verfahren zum Herstellen eines Rotors (10), insbesondere für ein Flugzeugtriebwerk, bei welchem eine Mehrzahl von Laufschaufeln (14) an einem Rotorgrundkörper (12) angebracht wird, wobei wenigstens eine Laufschaufeln (14) mit wenigstens einem integralen Dichtungselement (24) am Rotorgrundkörper (12) angebracht wird, wobei mittels des wenigstens einen Dichtungselements (24) ein jeweiliger Fußzwischenraum (22) im Bereich eines Schaufelfußes (20) radial unterhalb einer Schaufelplattform (18) der jeweiligen Laufschaufel (14) abgedichtet wird.

## Beschreibung

Die Erfindung betrifft einen Rotor mit einem Rotorgrundkörper und einer Mehrzahl von am Rotorgrundkörper angebrachten Laufschaufeln. Die Erfindung betrifft weiterhin ein Verfahren zum Herstellen eines derartigen Rotors, eine Laufschaufel für einen solchen Rotor sowie ein Flugzeugtriebwerk.

Traditioneller Weise umfassen Rotoren für thermische Gasturbinen Laufschaufeln, die lösbar an einem Rotorgrundkörper angebracht sind. Hierzu wird beispielsweise ein schwalbenschanzförmig ausgebildeter Fluss der Laufschaufel in eine komplementär ausgebildete, sich in axialer Richtung der Gasturbine erstrechende Nut im Rotorgrundkörper eingeschoben und anschließend gegen ein Herausrutschen in axialer Richtung gesichert. Aus verschiedenen Gründen, insbesondere aus Gewichtsgründen, werden jedoch inzwischen immer häufiger Rotoren für thermische Gasturbinen verwendet, bei denen die Laufschaufeln fest bzw. unlösbar, insbesondere stoffschlüssig, an dem Rotorgrundkörper angebracht sind. Solche Rotoren, beispielsweise Turbinenrotoren, werden in Abhängigkeit ihrer Bauform auch als "Blisk" oder "Bling" bezeichnet, wobei es sich hierbei um zusammengesetzte Kunstwörter aus "blade" und "disc" bzw. "blade" und "ring" handelt. Die vorliegende Erfindung betrifft dabei die zuletzt genannte Art von Rotoren, d.h. Rotoren bei denen die Laufschaufeln fest bzw. unlösbar, insbesondere stoffschlüssig, an dem Rotorgrundkörper angebracht sind.

Durch die während des Betriebs in einem Triebwerk auftretenden hohen Temperaturunterschiede zwischen denjenigen Bereichen des Rotors, die in einem Heißgaskanal der Gasturbine angeordnet sind, und den vom Heißgas abgeschirmten Bereichen des Rotors, ergeben sich insbesondere in der Übergangszone nahe der radial inneren Begrenzung des Heißgaskanals, das heißt im Bereich von Schaufelplattformen der Laufschaufeln, besonders hohe Temperaturgradienten. Damit die aus diesen Temperaturunterschieden resultierenden thermischen Dehnungen nicht zu hohe Spannungen im Rotor induzieren, müssen die Schaufeln daher auch unterhalb ihrer Schaufelplattformen durch entsprechende Einschnitte noch bis in einen Bereich voneinander getrennt sein, in dem die während des Betriebs zu erwartenden Temperaturen auf ein akzeptables Maß gefallen sind.

Durch diese Einschnitte entstehen Fußzwischenräume, die sich in radialer Richtung zwischen den Unterseiten der jeweiligen Schaufelplattformen und dem Rotorgrundkörper erstrecken und Leckagequerschnitte bilden, die dementsprechend wieder abgedichtet werden müssen, um eine unerwünschte Leckageströmung in axialer Richtung der entsprechenden Strömungsmaschine zu verhindern oder zumindest zu minimieren. Zur Abdichtung dieser Fußzwischenräume ist es beispielsweise bekannt, einzelne Stopfen, die an die Geometrie der einzelnen Einschnitte angepasst sind, in den Fußzwischenräumen anzuordnen. Hierzu sind aber entsprechend viele Bauteile erforderlich, die mit einer hohen Genauigkeit gefertigt sein müssen. Dies führt zu vergleichsweise hohen Herstellungs- und Montagekosten. Darüber hinaus können diese Stopfen durch die im Betrieb der zugeordneten Turbine stattfindenden Mikrobewegungen gegebenenfalls den Rotorgrundkörper und die Laufschaufeln beschädigen.

Alternativ ist es zur Abdichtung bekannt, segmentförmige Dichtplatten zu verwenden, die in entsprechende Aufnahmen an einer Seite des Rotorgrundkörpers montiert und von diesem getragen werden. Um den erforderlichen Formschluss zwischen Rotorgrundkörper und Dichtplatte zu erreichen, wird die Dichtplatte oder ein zusätzliches Verschlussteil nach dem Anbringen am Rotorgrundkörpers zusätzlich verformt. Auch diese Lösung führt zu vergleichsweise hohen Herstellungs- und Montagekosten, da ebenfalls viele Bauteile benötigt werden, die zudem sehr exakt gefertigt sein müssen.

Schließlich ist es bekannt, einen einzelnen Dichtring an einer Seite des Rotorgrundkörpers zu montieren. Da solche Dichtringe im Betrieb jedoch hohen Fliehkraftbelastungen ausgesetzt sind, müssen Rohmaterial und Fertigungsgüte des Dichtrings auf die hohen Belastungen abgestimmt werden, was auch bei diesem Teil vergleichsweise hohe Kosten verursacht.

Aufgabe der vorliegenden Erfindung ist es, einen beschaufelten Rotor bereitzustellen, welcher eine verbesserte Abdichtung von Fußzwischenräumen zwischen den Schaufelplattformen seiner Laufschaufeln und seinem Rotorgrundkörper aufweist. Weitere Aufgaben der Erfindung bestehen darin, ein Verfahren zum Herstellen eines solchen Rotors, eine Laufschaufel für einen solchen Rotor sowie ein Flugzeugtriebwerk mit einem solchen Rotor bereitzustellen.

Die Aufgaben werden erfindungsgemäß durch einen Rotor mit den Merkmalen des Patentanspruchs 1, ein Verfahren mit den Merkmalen des Patentanspruchs 9, eine Laufschaufel mit den Merkmalen des Patentanspruchs 12 und ein Flugzeugtriebwerk gemäß Patentanspruch 14 gelöst. Vorteilhafte Ausgestaltungen mit zweckmäßigen Weiterbildungen der Erfindung sind in den jeweiligen Unteransprüchen angegeben.

Ein erster Aspekt der Erfindung betrifft einen Rotor, der sich insbesondere für ein Flugzeugtriebwerk eignet und einen Rotorgrundkörper sowie eine Mehrzahl von am Rotorgrundkörper angebrachten Laufschaufeln umfasst. Die Laufschaufeln sind dabei fest bzw. unlösbar, insbesondere stoffschlüssig, an dem Rotorgrundkörper angebracht. Eine verbesserte Abdichtung von Fußzwischenräumen zwischen den Schaufelplattformen seiner Laufschaufeln und seinem Rotorgrundkörper wird dabei erfindungsgemäß dadurch erreicht, dass wenigstens eine Laufschaufel wenigstens ein integrales Dichtungselement aufweist, mittels welchem ein Fußzwischenraum im Bereich eines Schaufelfußes radial unterhalb einer Schaufelplattform der Laufschaufel, insbesondere in axialer Richtung der entsprechenden Strömungsmaschine, abgedichtet ist. Mit anderen Worten ist es erfindungsgemäß vorgesehen, dass eine, mehrere oder alle der am Rotorgrundkörper befestigten Laufschaufeln jeweils ein integriertes Dichtungselement zum Abdichten eines jeweils zugeordneten Fußzwischenraums aufweisen. Hierdurch werden neben einer verbesserten Abdichtung aufgrund geringerer Leckagequerschnitte auch eine vorteilhafte Gewichtsreduzierung sowie eine vereinfachte und kostengünstigere Herstellung des Rotors ermöglicht. Das bzw. die Dichtungselemente können beispielsweise als integrale, vom Schaufelfuß abragende Trennwände ausgebildet sein und somit als eine Art Schott bzw. Schottwand fungieren.

Eine besonders zuverlässige Abdichtung wird in weiterer Ausgestaltung der Erfindung dadurch erzielt, dass sich das wenigstens eine Dichtungselement in Richtung einer Hochachse der jeweiligen Laufschaufel ausgehend von einer Schaufelplattform entlang des Schaufelfußes der jeweiligen Laufschaufel zumindest bis zum Boden des Schaufelfußes erstreckt. Mit anderen Worten besitzen das oder die Dichtungselemente zumindest im Wesentlichen die gleiche Höhe wie der bezüglich einer Drehachse des Rotors ebenfalls radial unterhalb der Schaufelplattform angeordnete Schaufelfuß. Ebenso kann vorgesehen sein, dass manche oder alle Dichtungselemente in radialer Richtung über den Boden des Schaufelfußes hinaus ragen, d.h. eine größere Höhe als der Schaufelfuß aufweisen. In diesem Fall kann in dem Rotorgrundkörper zum Beispiel eine in Umfangsrichtung verlaufende Radialnut vorgesehen sein, in welche ein entsprechender Abschnitt des Dichtungselements hineinragt.

Weitere Vorteile ergeben sich, indem das wenigstens eine Dichtungselement bezüglich einer Drehachse des Rotors im Bereich einer Vorderseite und/oder im Bereich einer Hinterseite der Laufschaufel und/oder in Umfangsrichtung an einer Seite des Schaufelfußes und/oder an beiden Seiten des Schaufelfußes angeordnet ist. Mit anderen Worten ist es erfindungsgemäß vorgesehen, dass manche oder alle Laufschaufeln im Bereich ihrer in Strömungsrichtung betrachtet stromauf liegenden Vorderseite und/oder im Bereich ihrer stromab liegenden Hinterseite wenigstens ein Dichtungselement aufweisen. Alternativ oder zusätzlich kann das Dichtungselement in Umfangs- bzw. Drehrichtung betrachtet nur an einer Seite des Schaufelfußes ausgebildet sein. Alternativ kann das Dichtungselement zu beiden Seiten des Schaufelfußes ausgebildet sein, wobei hierfür grundsätzlich ein durchgehendes Dichtungselement oder zwei einzelne Dichtungselemente verwendet werden können, um einen jeweiligen Fußzwischenraum abzudichten. Hierdurch können die jeweils geforderte Dichtwirkung und Luftleitung optimal eingestellt werden.

In einer weiteren vorteilhaften Ausgestaltung der Erfindung überlappt wenigstens ein Dichtungselement einfach und/oder mehrfach mit einem jeweils angrenzenden Dichtungselement und/oder mit dem Grundkörper. Mit anderen Worten ist es erfindungsgemäß vorgesehen, dass die Dichtungselemente in der Art einer Nut-Feder-Verbindung bzw. in der Art einer Spundung mit einem jeweils angrenzenden Dichtungselement bzw. mit dem Grundkörper überlappen. Hierdurch kann der Rotor mit minimal möglichen Spalten aufgebaut werden, wobei vorteilhafter Weise gleichzeitig Abdichtungen mit Schiebesitzen entstehen, die einen Dehnungsausgleich ermöglichen.

Weitere Vorteile ergeben sich, wenn das wenigstens eine Dichtungselement in eine Nut und/oder eine Stufe im Rotorgrundkörper eingreift. Neben einer verbesserten Abdichtung werden hierdurch auch eine höhere mechanische Stabilität sowie eine bessere Schwingungsdämpfung des Rotors erzielt.

In einer weiteren vorteilhaften Ausgestaltung der Erfindung verläuft die Nut und/oder die Stufe in Umfangsrichtung des Rotorgrundkörpers. Mit anderen Worten umfasst der Rotorgrundkörper im Anbindungsbereich der Laufschaufeln wenigstens eine außenumfänglich umlaufende Nut bzw. eine außenumfänglich umlaufende Stufe, in welcher das oder die Dichtungselemente der zugeordneten Laufschaufeln angeordnet sind. Hierdurch werden eine besonders gute Abdichtung sowie eine besonders hohe mechanische Stabilität sichergestellt.

Eine zusätzliche Verbesserung der Schwingungseigenschaften des Rotors wird in weiterer Ausgestaltung der Erfindung erzielt, indem jeweils wenigstens zwei benachbarte Laufschaufeln als Schaufelcluster vorliegen, wobei mindestens zwei benachbarte Laufschaufeln des Schaufelclusters über ein äußeres Deckband miteinander verbunden sind.

In einer weiteren vorteilhaften Ausgestaltung der Erfindung ist vorgesehen, dass der Rotorgrundkörper aus einer Schmiedelegierung besteht und/oder dass die Laufschaufeln aus einer hochtemperaturfesten Legierung bestehen und/oder generativ hergestellt sind. Hierdurch werden eine besonders hohe Toleranz des Rotors gegenüber Temperaturgradienten sowie eine besonders kostengünstige und flexible Herstellung des Rotors ermöglicht.

Ein zweiter Aspekt der Erfindung betrifft ein Verfahren zum Herstellen eines Rotors, insbesondere für ein Flugzeugtriebwerk, bei welchem eine Mehrzahl von Laufschaufeln an einem Rotorgrundkörper fest bzw. unlösbar, insbesondere stoffschlüssig, angebracht wird. Unter "Anbringen" wird im Sinne der vorliegenden Erfindung auch ein Aufbau der Laufschaufeln auf dem Rotorgrundkörper durch ein generatives Verfahren verstanden, insbesondere ein Aufbau der Laufschaufeln durch ein loses, körniges Grundmaterial, welches örtlich selektiv, zum Beispiel mittels eines Lasers, aufgeschmolzen und dabei verfestigt wird, um der Laufschaufel ihre entsprechende Form zu verleihen. Erfindungsgemäß ist es dabei vorgesehen, dass wenigstens eine Laufschaufel mit wenigstens einem integralen Dichtungselement am Rotorgrundkörper angebracht wird, wobei mittels des wenigstens einen Dichtungselements ein jeweiliger Fußzwischenraum im Bereich eines Schaufelfußes radial unterhalb einer Schaufelplattform der jeweiligen Laufschaufel abgedichtet wird, insbesondere in axialer Richtung der entsprechenden Strömungsmaschine abgedichtet wird. Hierdurch werden neben einer verbesserten Abdichtung aufgrund geringerer Leckagequerschnitte auch eine vorteilhafte Gewichtsreduzierung sowie eine vereinfachte und kostengünstigere Herstellung des Rotors ermöglicht. Das bzw. die Dichtungselemente können beispielsweise als integrale Trennwand ausgebildet werden und somit als eine Art Schott bzw. Schottwand fungieren. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung wird der Rotorgrundkörper durch Drehen als Rotorscheibe hergestellt. Mit anderen Worten ist es vorgesehen, dass der Rotorgrundkörper durch Zerspanen aus einem Halbzeug in Form einer Rotorscheibe hergestellt wird. Diese wird dann als Basis zum Anbringen der Laufschaufeln verwendet. Der Rotorgrundkörper kann beispielsweise aus einem Schmiedematerial gefertigt werden.

In einer weiteren vorteilhaften Ausgestaltung der Erfindung ist vorgesehen, dass zunächst der Rotorgrundkörper bereitgestellt und die Laufschaufeln zusammen mit ihren integralen Dichtungselementen generativ auf dem Rotorgrundkörper aufgebaut werden. Dies ermöglicht eine besonders flexible Herstellung des Rotors, da der geometrisch weniger anspruchsvolle Rotorgrundkörper konventionell bzw. nicht generativ hergestellt und je nach späterem Anwendungszweck des Rotors mit unterschiedlichen Laufschaufeln versehen werden kann. Für die Laufschaufeln, die direkt auf dem Rotorgrundkörper aufgebaut werden, können dann die verschiedenen Vorteile generativer Fertigungsverfahren verwirklicht werden. Insbesondere erhöht sich bei generativen Fertigungsverfahren die Wirtschaftlichkeit mit steigender Komplexität der Bauteilgeometrie. Darüber hinaus kann durch das generative Aufbauen der Laufschaufeln auf dem Rotorgrundkörper auf ansonsten erforderliche zusätzliche Verbindungsschritte wie beispielsweise Schweißen oder Löten verzichtet werden. Ferner kann durch den Aufbau der Laufschaufeln auf dem Rotorgrundkörper mittels generativer Verfahren die Dichtwirkung weiter erhöht werden, wenn das integrale Dichtungselement in eine im Rotorgrundkörper vorgesehene, sich zumindest abschnittsweise in Umfangsrichtung erstreckende Radialnut eingreift, welche zuvor zum Beispiel durch einen Drehprozess in den Rotorgrundkörper kostengünstig eingebracht worden sein kann. Dies kann mit dem üblicheren Reibschweißverfahren zur Befestigung von Laufschaufeln auf dem Rotorgrundkörper nicht oder nur mit unverhältnismäßig großem Aufwand erreicht werden, da es beim Reibschweißen in der Regel erforderlich ist, die zu befestigende Laufschaufel in komplexen Bewegungsmustern relativ zu dem Rotorgrundkörper zu bewegen.

Ein dritter Aspekt der Erfindung betrifft eine Laufschaufel zur Anordnung an einem Rotorgrundkörper eines Rotors. Dabei ist erfindungsgemäß vorgesehen, dass die Laufschaufel wenigstens ein integrales Dichtungselement aufweist, mittels welchem im fest bzw. unlösbar, insbesondere stoffschlüssig montierten Zustand der Laufschaufel ein Fußzwischenraum im Bereich eines Schaufelfußes radial unterhalb einer Schaufelplattform der Laufschaufel abdichtbar ist. Hierdurch werden neben einer verbesserten Abdichtung aufgrund geringerer Leckagequerschnitte auch eine vorteilhafte Gewichtsreduzierung sowie eine vereinfachte und kostengünstigere Herstellung eines Rotors ermöglicht. Das Dichtungselement kann sich beispielsweise wandförmig in Richtung einer Hochachse der Laufschaufel ausgehend von ihrer Schaufelplattform entlang des Schaufelfußes zumindest bis zum Rotorgrundkörper erstrecken. Weitere Merkmale und deren Vorteile sind den Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

Eine besonders gute Dichtwirkung ist in einer vorteilhaften Ausgestaltung der Erfindung dadurch ermöglicht, dass das integrale Dichtungselement den Schaufelfuß U-förmig umgreift. Hierdurch wird im montierten Zustand der Laufschaufel im Bereich radial unterhalb der Schaufelplattform eine umlaufende Dichtwirkung mit minimalen Spalten sichergestellt.

Ein vierter Aspekt der Erfindung betrifft ein Flugzeugtriebwerk mit einem Rotor, welcher nach einer Ausführungsform des ersten Erfindungsaspekts ausgebildet ist und/oder mittels eines Verfahrens gemäß dem zweiten Erfindungsaspekt hergestellt ist und/oder wenigstens eine Laufschaufel nach einer Ausführungsform des dritten Erfindungsaspekts umfasst. Die sich hieraus ergebenden Merkmale und deren Vorteile sind den Beschreibungen der vorhergehenden Erfindungsaspekte zu entnehmen.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine teilgeschnittene, schematische Perspektivdarstellung eines erfindungsgemäßen Rotors gemäß einer ersten Ausführungsform; und
- Fig. 2: eine teilgeschnittene Aufsicht des erfindungsgemäßen Rotors gemäß einer zweiten Ausführungsform.

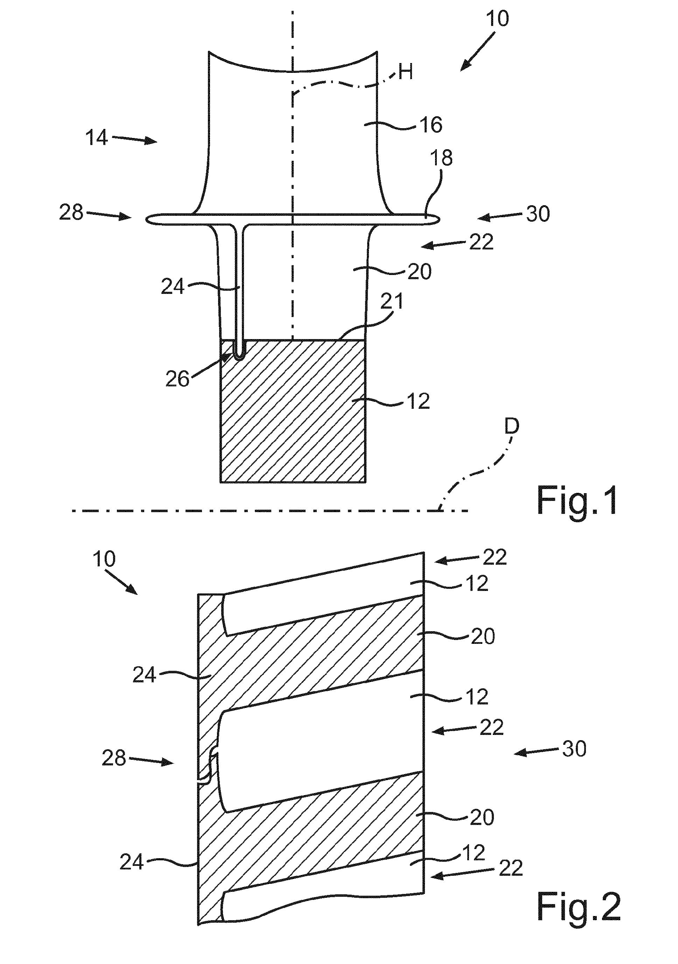

Fig. 1 zeigt eine teilgeschnittene, schematische Perspektivdarstellung (Meridianschnitt) eines erfindungsgemäßen Rotors 10 gemäß einer ersten Ausführungsform. Der Rotor 10, welcher vorliegend als Turbinenblisk für ein Flugzeugtriebwerk ausgebildet ist, umfasst einen geschnitten dargestellten Rotorgrundkörper 12, an dem mehrere Laufschaufeln 14 angebracht sind. Jede Laufschaufel 14 umfasst dabei zumindest ein Schaufelblatt 16 und eine bezüglich einer Drehachse D des Rotors radial darunter liegende Schaufelplattform 18. Die Schaufelplattform 18 stellt eine radial innere Begrenzung eines Heißgaskanals dar und soll verhindern, dass heißes Gas aus dem Heißgaskanal in den kühleren Bereich unterhalb der Schaufelplattform 18 gelangt. Zur radial äußeren Begrenzung des Heißluftkanals kann vorgesehen sein, dass die Laufschaufeln 14 ein radial äußeres Deckband (nicht gezeigt) aufweisen. Radial unterhalb der Schaufelplattform 18 befindet sich ein Schaufelfuß 20 der Laufschaufel 14, über welchen die Laufschaufel 14 an den Rotorgrundkörper 12 angebunden ist.

Während des Betriebs des Rotors 10 kommt es zu großen radialen Temperaturgradienten. Damit die aus diesen Temperaturunterschieden resultierenden thermischen Dehnungen nicht zu hohe Spannungen im Rotor 10 induzieren, sind die Laufschaufeln 14 auch unterhalb ihrer Schaufelplattformen 18 durch entsprechende Einschnitte noch bis zum Rotorgrundkörper 12 voneinander getrennt. Durch diese Einschnitte ergeben sich in den entstehenden Fußzwischenräumen 22, die sich in radialer Richtung zwischen den Unterseiten der jeweiligen Schaufelplattformen 18 und dem Rotorgrundkörper 12 erstrecken, Leckagequerschnitte, die dementsprechend wieder abgedichtet werden müssen, um eine unerwünschte Leckageströmung insbesondere in axialer Richtung des Flugtriebwerks zu verhindern oder zumindest zu minimieren. Zur Abdichtung der Fußzwischenräume umfassen die Laufschaufeln 14 jeweils ein integrales Dichtungselement 24, mittels welchen zugeordnete Fußzwischenräume 22 im Bereich radial unterhalb der Schaufelplattformen 18 und entlang der Schaufelfüße 20 der einzelnen Laufschaufel 14 abgedichtet sind.

Wie man in Fig. 1 erkennt, erstreckt sich das als Schottwand fungierende Dichtungselement 24 in Richtung einer Hochachse H der jeweiligen Laufschaufel 14 ausgehend von der Schaufelplattform 18 entlang des Schaufelfußes 20 der Laufschaufel 14 über den Boden 21 des Schaufelfußes 20 hinaus und ragt hierdurch in eine in Umfangsrichtung umlaufende Nut 26 des Rotorgrundkörpers 12 hinein. Denkbar sind dabei sowohl einfache als auch doppelte, dreifache etc. Überlappungen zwischen der Unterseite des Dichtungselements 24 und dem Rotorgrundkörper 12. Weiterhin kann vorgesehen sein, dass das Dichtungselement 24 den Schaufelfuß 20 U-förmig umgreift. Hierdurch wird eine integrale Abdichtung mit minimal möglichen Spalten und ohne die Notwendigkeit weiterer Bauteile erreicht. Durch die wandförmige Ausgestaltung des Dichtungselements 24 und die in Umfangsrichtung verlaufende Nut wird zudem ein Schiebesitz gebildet, der einen besonders guten Dehnungsausgleich ermöglicht. Das Dichtungselement 24 kann nach den gegebenen Erfordernissen wie in Fig. 1 gezeigt im Bereich einer Vorderseite 28 und/oder im Bereich einer Rückseite 30 vorgesehen werden. Die Laufschaufeln 14 können darüber hinaus als Zweierschaufelcluster aufbaut werden, die zusätzlich am Deckband miteinander verbunden sein können, um eine besonders hohe Schwingungsdämpfung sicherzustellen.

Die Laufschaufeln 14 werden dabei zusammen mit ihren integrierten Dichtungselementen 24 generativ auf einem gedrehten Rotorgrundkörper 12, der aus einer Schmiedelegierung besteht, aufgebaut. Für die Laufschaufeln 14 wird ein geeignetes Material, beispielsweise eine hochtemperaturfeste Legierung verwendet. Ebenfalls kann vorgesehen sein, dass die Laufschaufeln 14 aus unterschiedlichen Materialien gefertigt werden. Das für die Laufschaufeln 14 verwendete Material bzw. Materialien kann/können sich von dem Material des Rotorgrundkörpers 12 verwendete Material unterscheiden.

Fig. 2 zeigt eine teilgeschnittene Aufsicht des erfindungsgemäßen Rotors 10 gemäß einer zweiten Ausführungsform. Man erkennt, dass die Dichtungselemente 24 im Unterschied zum ersten Ausführungsbeispiel auf der Vorderseite 28 bündig mit dem Rotorgrundkörper 12 abschließen. Zu diesem Zweck sind die Dichtungselemente 24 in einer entsprechenden, in Umfangsrichtung umlaufenden Stufe (nicht gezeigt) im Rotorgrundkörper 12 angeordnet. Weiterhin erkennt man, dass sich die Dichtungselemente 24 durchgängig zu beiden Seiten der jeweiligen Schaufelfüße 20 erstrecken. Die Seitenwände der Dichtungselemente 24 überlappen dabei in der Art einer Spundung mit angrenzenden Dichtungselementen 24, wodurch ebenfalls ein Schiebesitz gebildet wird, der einen besonders guten Dehnungsausgleich ermöglicht. Neben der gezeigten einfachen Überlappung sind natürlich auch für diesen Fall doppelte, dreifache etc. Überlappungen denkbar.

## Patentansprüche

1. Rotor (10), insbesondere für ein Flugzeugtriebwerk, umfassend einen Rotorgrundkörper (12) und eine Mehrzahl von am Rotorgrundkörper (12) angebrachten Laufschaufeln (14), wobei die Laufschaufeln (14) fest bzw. unlösbar, insbesondere stoffschlüssig, an dem Rotorgrundkörper (12) angebracht sind, **dadurch gekennzeichnet, dass** wenigstens eine Laufschaufel (14) wenigstens ein integrales Dichtungselement (24) aufweist, mittels welchem ein Fußzwischenraum (22) im Bereich eines Schaufelfußes (20) radial unterhalb einer Schaufelplattform (18) der Laufschaufel (14) abgedichtet ist.

2. Rotor (10) nach Anspruch 1, **dadurch gekennzeichnet, dass** sich das wenigstens eine Dichtungselement (24) in Richtung einer Hochachse (H) der jeweiligen Laufschaufel (14) ausgehend von einer Schaufelplattform (18) entlang des Schaufelfußes (20) der jeweiligen Laufschaufel (14) zumindest bis zu einem Boden (21) des Schaufelfußes (20) erstreckt.

3. Rotor (10) nach Anspruch 1 oder 2, **dadurch gekennzeichnet, dass** das wenigstens eine Dichtungselement (24) bezüglich einer Drehachse (D) des Rotors (10) im Bereich einer Vorderseite (28) und/oder im Bereich einer Hinterseite (30) der Laufschaufel (14) und/oder in Umfangsrichtung an einer Seite des Schaufelfußes (20) und/oder an beiden Seiten des Schaufelfußes (20) angeordnet ist.

4. Rotor (10) nach einem der Ansprüche 1 bis 3, **dadurch gekennzeichnet, dass** das wenigstens eine Dichtungselement (24) einfach und/oder mehrfach mit einem jeweils angrenzenden Dichtungselement (24) und/oder mit dem Grundkörper (12) überlappt.

5. Rotor (10) nach einem der Ansprüche 1 bis 4, **dadurch gekennzeichnet, dass** das wenigstens eine Dichtungselement (24) in eine Nut (26) und/oder eine Stufe im Rotorgrundkörper (12) eingreift.

6. Rotor (10) nach Anspruch 5, **dadurch gekennzeichnet, dass** die Nut (26) und/oder die Stufe in Umfangsrichtung des Rotorgrundkörpers (12) verläuft.

7. Rotor (10) nach einem der Ansprüche 1 bis 6, **dadurch gekennzeichnet, dass** jeweils wenigstens zwei benachbarte Laufschaufeln (14) als Schaufelcluster vorliegen, wobei mindestens zwei benachbarte Laufschaufeln (14) des Schaufelclusters über ein äußeres Deckband miteinander verbunden sind.

8. Rotor (10) nach einem der Ansprüche 1 bis 7, **dadurch gekennzeichnet, dass** der Rotorgrundkörper (12) aus einer Schmiedelegierung besteht und/oder dass die Laufschaufeln (14) aus einer hochtemperaturfesten Legierung bestehen und/oder generativ hergestellt sind.

9. Verfahren zum Herstellen eines Rotors (10), insbesondere für ein Flugzeugtriebwerk, bei welchem eine Mehrzahl von Laufschaufeln (14) an einem Rotorgrundkörper (12) fest bzw. unlösbar, insbesondere stoffschlüssig, angebracht wird, **dadurch gekennzeichnet, dass** wenigstens eine Laufschaufel (14) mit wenigstens einem integralen Dichtungselement (24) am Rotorgrundkörper (12) angebracht wird, wobei mittels des wenigstens einen Dichtungselements (24) ein jeweiliger Fußzwischenraum (22) im Bereich eines Schaufelfußes (20) radial unterhalb einer Schaufelplattform (18) der jeweiligen Laufschaufel (14) abgedichtet wird.

10. Verfahren nach Anspruch 9, **dadurch gekennzeichnet, dass** der Rotorgrundkörper (12) durch Drehen als Rotorscheibe hergestellt wird.

11. Verfahren nach Anspruch 9 oder 10, **dadurch gekennzeichnet, dass** zunächst der Rotorgrundkörper (12) bereitgestellt und die Laufschaufeln (14) zusammen mit ihren integralen Dichtungselementen (24) generativ auf dem Rotorgrundkörper (12) aufgebaut werden.

12. Laufschaufel (14) zur Anordnung an einem Rotorgrundkörper (12) eines Rotors (10), **dadurch gekennzeichnet, dass** diese wenigstens ein integrales Dichtungselement (24) aufweist, mittels welchem im fest bzw. unlösbar, insbesondere stoffschlüssig montierten Zustand der Laufschaufel (14) ein Fußzwischenraum (22) im Bereich eines Schaufelfußes (20) radial unterhalb einer Schaufelplattform (18) der Laufschaufel (14) abdichtbar ist.

13. Laufschaufel (14) nach Anspruch 12, **dadurch gekennzeichnet, dass** das integrale Dichtungselement (24) den Schaufelfuß (20) U-förmig umgreift.

14. Flugzeugtriebwerk mit einem Rotor (10), welcher nach einem der Ansprüche 1 bis 8 ausgebildet ist und/oder mittels eines Verfahrens nach einem der Ansprüche 9 bis 11 hergestellt ist und/oder wenigstens eine Laufschaufel (14) nach Anspruch 12 oder 13 umfasst.
